# DEMANDE DE BREVET EUROPEEN

(11) **EP 4 847 456 A1**
(43) Date de publication de la demande: **02.12.2026**
(21) Numéro de dépôt: 26181221.8
(22) Date de dépôt: 27.05.2026
(51) Int. Cl.: C03B 9/00, B24C 1/06, C03B 9/48, C03B 9/347, C03B 40/00

(54) **PROCÉDÉ DE FABRICATION DE RÉCIPIENTS EN VERRE POUR SUBSTANCE PHARMACEUTIQUE**

(30) Priorité: 28.05.2025 FR 2505805
(71) Demandeur: SGD S.A., 92097 Paris la Défense Cédex (FR)
(72) Inventeur: GARNIER, Yvan, 80410 CAYEUX-SUR-MER (FR); ZHANG, Jingwei, 92160 ANTONY (FR)
(74) Mandataire: Cabinet Didier Martin

(57) **Abrégé**

L'invention concerne en particulier un procédé de fabrication de récipients en verre destinés à contenir une substance pharmaceutique, ledit procédé comprenant :
- une étape de fourniture d'un moule (11) destiné à conférer auxdits récipients leur forme finale, le moule présentant au moins une portion (14A, 14B) de surface interne ayant une rugosité de valeur initiale inférieure ou égale à une valeur seuil prédéfinie de rugosité,
- le formage d'une pluralité desdits récipients par moulage à partir de paraisons de verre fondu à l'aide du moule, et
- une étape de maintenance du moule, comprenant une opération de traitement de ladite portion de surface interne du moule pour conférer à ladite portion de surface interne une valeur de rugosité qui est inférieure ou égale à ladite valeur initiale de rugosité.

## Description

La présente invention se rapporte au domaine technique général des procédés de fabrication de récipients en verre et, plus spécifiquement, des procédés de fabrication de récipients en verre destinés à contenir une substance pharmaceutique.

Il est d'usage de recourir à des récipients en verre pour le conditionnement de substances à usage pharmaceutique, tels que des médicaments, le verre étant le matériau de prédilection lorsqu'il s'agit de conditionner et de stocker des substances sensibles. Il peut s'agir typiquement de récipients en verre incolore (verre « blanc ») ou en verre coloré, et par exemple en verre jaune ou brun (verre « ambré »). En particulier, on connaît à ce titre des récipients en verre dit « étiré », aussi appelé « verre tubulaire », qui sont fabriqués par formage de tubes (ou « cannes ») en verre étiré, par exemple selon un procédé dit « Danner » ou selon un procédé dit « Vello », et conversion de ces tubes en récipients. On connaît également des récipients en verre dit « moulé », qui sont fabriqués quant à eux par moulage de verre fondu, par exemple selon un procédé dit « soufflé - soufflé » ou selon un procédé dit « pressé - soufflé ».

Quel que soit leur procédé de fabrication, les récipients en verre spécifiquement destinés à contenir des substances pharmaceutiques doivent satisfaire à des exigences techniques particulièrement strictes. En particulier, de tels récipients en verre doivent présenter une résistance élevée, tant sur le plan mécanique que sur le plan chimique, afin de conserver lesdites substances pharmaceutiques dans les meilleures conditions possibles. De plus, de tels récipients en verre doivent permettre une inspection particulièrement stricte de leur contenu, après remplissage des récipients en verre sur une ligne de conditionnement pharmaceutique. En effet, il est impératif de pouvoir s'assurer en particulier que les récipients en verre ne contiennent pas, après remplissage, de particule étrangère susceptible de mettre en danger un patient auquel est administrée la substance pharmaceutique concernée. La présence de particules étrangères, telles que par exemple des fibres, des particules de verre, des particules de métal, des particules de matériaux élastomères, etc., peut s'avérer extrêmement dangereuse pour un patient, en particulier, mais évidemment pas uniquement, dans le cas où la substance à administrer est un produit pharmaceutique injectable par voie parentérale. Par exemple, si des particules étrangères d'une taille typiquement comprise entre 1 µm et 100 µm sont introduites par injection dans le système circulatoire d'un patient, cela est susceptible d'entraîner une grave inflammation ou même un blocage des vaisseaux sanguins. C'est la raison pour laquelle les Pharmacopées en vigueur définissent donc un certain nombre d'exigences strictes, tant en matière de résistance des récipients en verre, qu'en matière de présence de particules étrangères dans des produits pharmaceutiques, et en particulier des produits pharmaceutiques injectables parentéraux, contenus dans des récipients en verre. Typiquement, l'inspection des récipients en verre à la recherche d'éventuelles particules étrangères est réalisée, après remplissage de ces derniers, de manière optique à travers la paroi en verre des récipients. Par exemple, il peut s'agir d'une inspection visuelle sous un éclairage dans le spectre du visible, qui est réalisée à l'œil nu par un opérateur humain (inspection visuelle « manuelle ») ou à l'aide d'une machine d'inspection visuelle / optique (comprenant par exemple une caméra).

En regard de ces exigences particulières, chacun des types de récipients en verre, et chacun des procédés de fabrication correspondants, évoqués ci-avant, présente un certain nombre d'avantages, mais malheureusement également un certain nombre d'inconvénients. En effet, les récipients en verre étiré peuvent parfois présenter des performances inférieures à celles des récipients en verre moulé en matière de robustesse mécanique et de résistance chimique, sauf à subir des contrôles et / ou traitements additionnels. En retour, il a été observé que la fabrication de récipients en verre par moulage peut conduire à l'obtention de récipients en verre qui sont plus complexes à inspecter optiquement / visuellement que des récipients en verre obtenus à partir de verre étiré.

Les objets assignés à l'invention visent par conséquent à répondre aux problématiques précitées et, en particulier, à proposer un nouveau procédé de fabrication qui permet d'obtenir, de manière simple, fiable et répétable, des récipients en verre qui sont particulièrement robustes et sûrs.

Un autre objet de l'invention vise à proposer un nouveau procédé qui est en outre relativement simple et rapide à mettre en œuvre.

Un autre objet de l'invention vise à proposer un nouveau procédé qui permet en outre de fabriquer des récipients en verre particulièrement robustes et sûrs, à des cadences industrielles élevées.

Les objets assignés à l'invention sont atteints à l'aide d'un procédé de fabrication de récipients en verre destinés à contenir une substance pharmaceutique, ledit procédé comprenant :
- une étape de fourniture d'un moule destiné à conférer auxdits récipients leur forme finale, ledit moule présentant au moins une portion de surface interne ayant une rugosité de valeur initiale inférieure ou égale à une valeur seuil prédéfinie de rugosité,
- le formage d'une pluralité desdits récipients par moulage à partir de paraisons de verre fondu à l'aide dudit moule, et
- une étape de maintenance dudit moule, ladite étape de maintenance comprenant une opération de traitement de ladite portion de surface interne dudit moule pour conférer à ladite portion de surface interne une valeur de rugosité qui est inférieure ou égale à ladite valeur initiale de rugosité.

D'autres particularités et avantages de l'invention apparaîtront et ressortiront plus en détail à la lecture de la description faite ci-après, en référence aux dessins annexés, donnés uniquement à titre d'exemples illustratifs et non limitatifs, parmi lesquels :
- la figure 1 illustre un mode de réalisation d'un récipient en verre fabriqué selon un procédé conforme à l'invention ;
- la figure 2 illustre, selon une vue en coupe B-B longitudinale (verticale), le récipient de la figure 1 ;
- la figure 3 illustre, selon une vue en éclaté, un mode de réalisation d'un moule qui peut être utilisé pour fabriquer le récipient des figures 1 et 2, et conférer à ce récipient sa forme finale. Il s'agit ici d'un moule finisseur, comprenant un fond finisseur amovible, deux coquilles finisseur séparables, et une plaque finisseur formée en deux parties par lesdites coquilles finisseur ;
- la figure 4 illustre, selon une vue de dessus, le moule de la figure 3 ;
- la figure 5 illustre, selon une vue en coupe A-A longitudinale (verticale), le moule des figures 3 et 4, en configuration assemblée et fermée ;

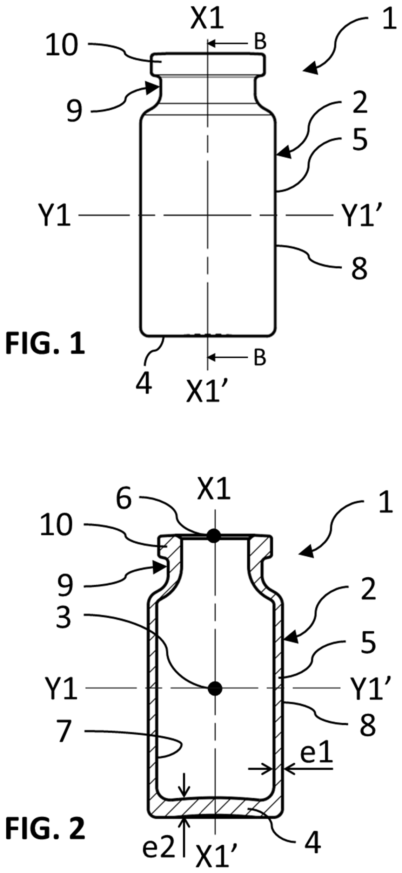

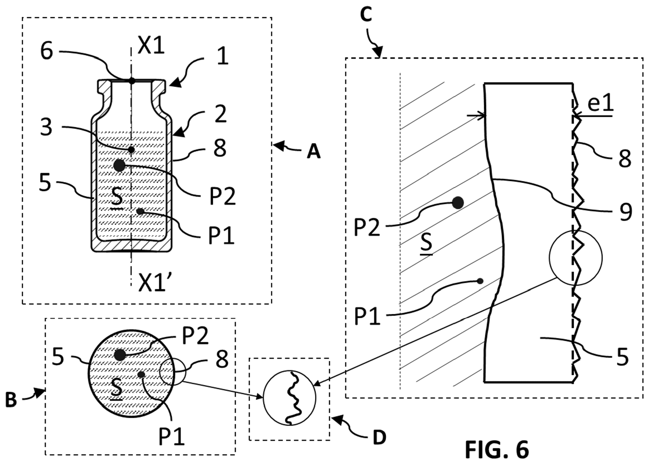

- la figure 6 illustre, de manière schématique, le récipient des figures 1 et 2, selon une vue en coupe B-B longitudinale (verticale) en haut à gauche (détail A) et selon une vue en coupe transverse en bas à gauche (détail B). Le récipient illustré contient ici une substance pharmaceutique et deux particules étrangères. En partie droite de la figure 6 (détail C), ledit récipient est illustré schématiquement selon une vue en coupe longitudinale tronquée pour mettre en évidence un état de surface particulier de la face externe du récipient. En partie centrale inférieure de la figure 6 (détail D), un détail de l'état de surface de la face externe du récipient est illustré schématiquement. S'agissant ici d'une illustration schématique, les formes, dimensions et nombre de particules étrangères illustrées ne sont évidemment pas nécessairement représentatifs des formes, dimensions et nombre de particules étrangères susceptibles d'être présentes dans les récipients obtenus à l'aide de procédé selon l'invention, après remplissage desdits récipients.

L'invention concerne un procédé de fabrication de récipients 1 en verre, tels que, par exemple, des bouteilles, des fioles ou des flacons en verre. Plus spécifiquement les récipients 1 concernés par l'invention sont destinés à contenir (au moins) une substance S (ou « produit ») pharmaceutique, tel que par exemple un médicament, typiquement destinée à être administrée par voie parentérale (générale ou locorégionale, en particulier par injection) ou encore à être ingérée ou absorbée par un patient, humain ou animal. De préférence, ladite substance S pharmaceutique est liquide, en solution dans un liquide ou encore en suspension dans un liquide.

Au sens de l'invention, le terme « verre » désigne un verre minéral, préférentiellement à base de dioxyde de silicium SiO₂ (verre de silice). Lesdits récipients 1 sont typiquement en verre transparent, c'est-à-dire qui se laisse traverser par la lumière sans diffusion significative. Le verre transparent des récipients 1 permet donc de distinguer nettement, par voie optique, des objets à travers l'épaisseur du verre desdits récipients 1. De préférence, lesdits récipients 1 en verre sont en verre transparent (au moins) dans le spectre visible pour l'œil humain, c'est-à-dire pour des longueurs d'onde qui sont généralement considérées comme étant comprises entre 380 nm et 780-800 nm. Ainsi, lesdits récipients 1 en verre seront avantageusement destinés à être soumis à une inspection optique / visuelle dans le spectre visible pour l'œil humain, que ce soit par un opérateur humain ou par des moyens techniques. Il peut s'agir d'un verre incolore (verre « blanc », ou « clair »), ou au contraire d'un verre coloré (par exemple du verre jaune ou brun, ou « ambré »), notamment pour protéger la ou les substance(s) S contenue(s) dans les récipients 1 des effets de la lumière, en particulier dans certaines plages de longueurs d'onde (UV, etc.). Typiquement, le verre desdits récipients 1 présente un indice de réfraction compris entre 1,4800 et 1,5200.

Typiquement, lesdits récipients 1 comprennent chacun une paroi 2, en verre, qui délimite une cavité d'accueil 3 pour ladite substance S pharmaceutique à stocker. Ladite paroi 2 forme un fond 4 et une paroi latérale 5 (ou « corps ») qui s'étend depuis ledit fond 4 en direction d'une ouverture 6 dudit récipient 1 suivant une direction X1-X1' d'extension longitudinale (ou direction « verticale ») dudit récipient 1. Le verre des récipients 1 étant typiquement transparent, comme évoqué ci-avant, la paroi 2 des récipients 1 est donc typiquement transparente. Ladite ouverture 6 donne ainsi accès à la cavité d'accueil 3 du récipient 1. La paroi 2 du récipient 1 présente une face interne 7, située en regard de ladite cavité d'accueil 3 et préférentiellement destinée à venir en contact direct avec ladite substance S pharmaceutique, et une face externe 8 opposée. De manière générale, lesdits récipients 1 peuvent présenter toute forme adaptée à leur fonction et à la (ou aux) substance(s) S pharmaceutique(s) qu'ils sont destinés à contenir, comme par exemple une forme de bouteille, de fiole ou de flacon. Comme illustré en exemple à la figure 1, la paroi 2 peut en outre comprendre des épaules et un col 9 pourvu d'une bague 10, laquelle délimite l'ouverture 6 du récipient 1. Avantageusement, ladite ouverture 6 est prévue pour pouvoir être obturée par un bouchon ou un opercule, amovible ou perforable, à assembler à ladite bague 10.

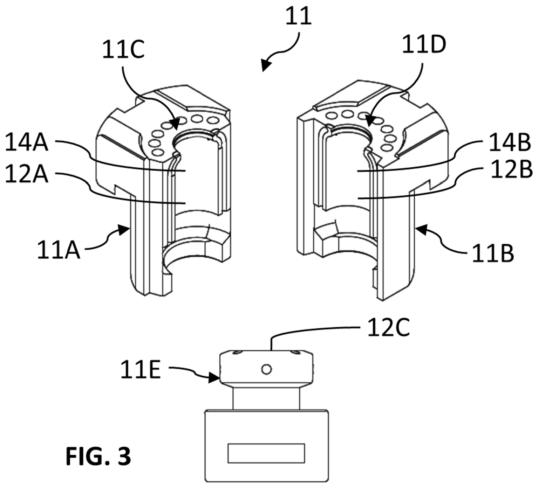

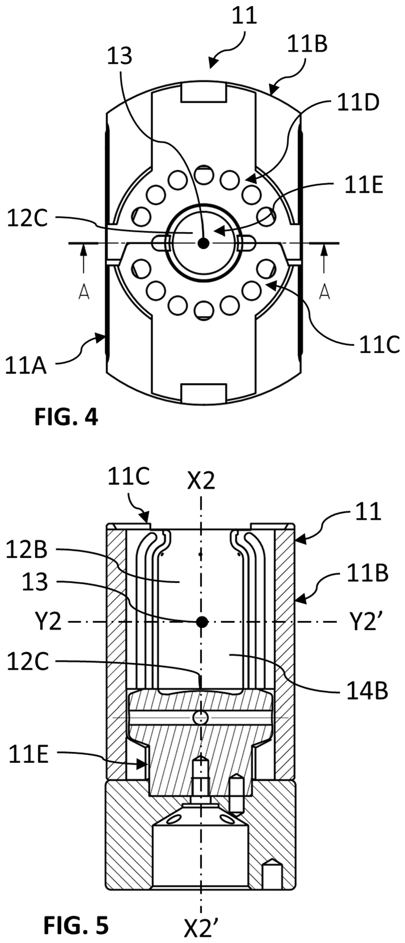

Le procédé selon l'invention comprend une étape de fourniture d'un moule 11 qui est destiné à conférer auxdits récipients 1 leur forme finale, c'est-à-dire la forme définitive attendue des récipients à fabriquer. Comme illustré en exemple aux figures 3 à 5, le moule 11 présente ainsi généralement une face interne 12A, 12B, 12C, correspondant à la face externe 8 du récipient 1 à former dans ledit moule 11, qui délimite une cavité 13 au sein de laquelle le récipient 1 est mis en forme. Ladite face interne 12A, 12B, 12C du moule 11 forme donc, en négatif, une empreinte de la face externe 8 du récipient 1. Typiquement, comme illustré en exemple aux figures 3 et 4, le moule 11 peut comprendre une pluralité d'éléments 11A, 11B, 11E de moule distincts, assemblés entre eux, et qui sont respectivement destinés à conférer sa forme finale, définitive, à une partie correspondante des récipients 1. Le moule 11 peut être en tout matériau connu et adapté dans le domaine des moules pour la fabrication de récipients 1 en verre, comme par exemple en fonte ou en acier, avec ou sans revêtement de surface. Conformément à l'invention, le moule 11 fourni lors de ladite étape de fourniture, présente au moins une portion 14A, 14B de surface interne (ou « portion prédéfinie de surface interne »), c'est-à-dire au moins une zone de la surface de la face interne 12 dudit moule 11, qui a une rugosité de valeur initiale inférieure ou égale à une valeur seuil prédéfinie de rugosité. En d'autres termes, le moule 11 est donc initialement fourni (typiquement en tant que moule neuf) avec au moins une portion particulière, prédéfinie, de la surface de sa face interne 12A, 12B, 12C dont la rugosité présente une valeur qui est inférieure ou égale à une valeur seuil prédéfinie de rugosité. Comme on le comprend, le procédé peut donc avantageusement comprendre une étape de définition de ladite valeur seuil prédéfinie de rugosité, en particulier suivant certains critères qui seront décrits dans ce qui suit. Typiquement, ladite valeur seuil prédéfinie de rugosité peut constituer une valeur cible maximale à garantir par un fabricant du moule 11 lors de sa livraison à l'état neuf. Comme on le verra plus en détail dans ce qui suit, ladite portion 14A, 14B de surface interne correspond à une portion particulière d'intérêt de la surface de la face externe 8 (ou « portion prédéfinie de surface externe ») des récipients 1 obtenus à l'aide dudit moule 11. Ceci étant, il est tout à fait envisageable que sensiblement toute la surface interne du moule 11 fourni lors de ladite étape de fourniture ait une telle rugosité de valeur initiale inférieure ou égale à une valeur seuil prédéfinie de rugosité.

Le procédé selon l'invention comprend ensuite le formage d'une pluralité de récipients 1 par moulage à partir de paraisons de verre fondu à l'aide dudit moule 11. Ainsi, à l'aide du même moule 11 fourni, on forme par moulage une pluralité de récipients 1 en verre, chacun à partir d'une paraison de verre fondu. A l'issue du formage, les récipients 1 présentent leur forme finale, définitive. Comme cela ressortira de ce qui suit, ce n'est pas nécessairement la paraison de verre fondu elle-même qui est introduite dans ledit moule 11 pour former le récipient 1 correspondant. En effet, ledit le récipient 1 peut être obtenu par moulage d'une ébauche dans ledit moule 11, laquelle ébauche a été précédemment obtenue à partir de ladite paraison de verre fondu (par exemple par pressage ou par soufflage de ladite paraison de verre fondu).

Le procédé selon l'invention comprend en outre (au moins) une étape de maintenance dudit moule 11, c'est-à-dire une étape visant à entretenir le moule 11 au cours de son cycle de vie (*i.e.* au cours de sa durée d'utilisation en production), typiquement après son utilisation pour la fabrication d'un certain nombre de récipients 1. Ladite étape de maintenance vise en particulier à nettoyer le moule 11 et la face interne 12A, 12B, 12C de ce dernier, en vue d'éliminer d'éventuels débris, résidus et contaminants présents (morceaux de verre, poussière, graisse, calamine, etc.), susceptibles de dégrader les performances du moule 11 et la qualité des récipients 1 formés à l'aide de ce dernier. Si nécessaire, ladite étape de maintenance peut comprendre une ou plusieurs opérations de réparation du moule 11. Par exemple, la réparation du moule 11 peut consister en un rechargement local de matière (soudure) pour combler un impact ou une fissure, puis un usinage pour retirer un éventuel excédent de matière, en la réfection d'un revêtement de surface, etc. Ladite étape de maintenance peut être réalisée soit de manière préventive, selon une fréquence de maintenance prédéterminée, soit de manière curative, au cas par cas, selon les résultats d'un contrôle et / ou de mesure(s) réalisé(es) sur les récipients 1 formés, par exemple au « bout froid » de la chaîne de production des récipients 1 (par exemple en salle blanche classée ISO8). Il est également possible de prévoir que l'étape de maintenance soit réalisée à la fois de manière préventive et de manière curative si nécessaire. Par exemple, ladite fréquence de maintenance prédéterminée peut être choisie selon le(s) matériau(x) du moule 11 et / ou encore selon un ou plusieurs paramètres de fabrication, tel que le nombre de récipients fabriqués à l'aide dudit moule 11 par exemple. Par exemple, l'étape de maintenance peut être réalisée de manière curative, au cas par cas, selon les résultats d'un contrôle et / ou de mesure(s) optique(s) / visuel(les) ou encore d'un contrôle et / ou de mesure(s) mécanique(s), et par exemple un contrôle dimensionnel, réalisé(es) sur les récipients 1 ainsi formés. Bien évidemment, le même moule 11 peut être soumis à une pluralité d'étapes de maintenance au cours de son cycle de vie.

Conformément à l'invention, ladite étape de maintenance comprend en particulier une opération de traitement d'au moins ladite portion 14A, 14B de surface interne dudit moule 11 pour conférer à ladite portion 14A, 14B de surface interne, à l'issue donc de ladite opération de traitement de surface, une valeur de rugosité qui est inférieure ou égale à ladite valeur initiale de rugosité (et donc, inférieure ou égale à ladite valeur seuil prédéfinie de rugosité). En d'autres termes, ladite étape de maintenance comprend une opération de traitement d'au moins ladite portion 14A, 14B de surface interne dudit moule 11, à l'issue de laquelle opération de traitement, ladite portion 14A, 14B de surface interne dudit moule 11 au moins présente une valeur de rugosité qui est inférieure ou égale à ladite valeur initiale de rugosité.

Bien évidemment, ladite opération de traitement de surface peut avantageusement concerner une zone plus étendue de la surface interne du moule 11, et plus avantageusement encore concerner l'intégralité de la surface interne du moule 11, et non seulement ladite portion 14A, 14B de surface interne dudit moule 11. Cette opération de traitement de surface a donc pour finalité de garantir que la valeur de rugosité de ladite portion 14A, 14B de surface interne dudit moule 11 soit au plus égale à, sinon plus faible que, ladite valeur initiale de rugosité de ladite portion 14A, 14B de surface interne dudit moule 11. Avantageusement, dans le cas où le moule 11 est soumis à une pluralité d'étapes de maintenance au cours de son cycle de vie, chacune de ces étapes de maintenance (et non seulement au moins l'une de ces dernières) comprend une opération de traitement d'au moins ladite portion 14A, 14B de surface interne dudit moule 11 telle que décrite ci-avant.

Ainsi, le procédé selon l'invention est un procédé de fabrication de récipients 1 en verre moulé, qui permet d'obtenir des récipients 1 en verre qui présentent généralement non seulement une meilleure résistance mécanique, mais également de meilleures performances en matière de résistance chimique (en particulier de résistance hydrolytique), que des récipients qui sont fabriqués en verre étiré (ou « verre tubulaire »), c'est-à-dire par formage de tubes (ou « cannes ») en verre étiré (par exemple selon le procédé dit « Danner » ou selon le procédé dit « Vello ») et conversion de ces tubes en récipients. En particulier, la fabrication de récipients en verre par moulage assure une très bonne maîtrise de la composition du verre des récipients 1, et donc des performances chimiques des récipients 1. En effet, dans le cas du moulage, la composition du verre des récipients est sensiblement identique à celle des paraisons de verre à partir desquelles lesdits récipients sont formés. En comparaison, dans le cas de récipients en verre étiré, la composition du verre peut être altérée au cours de la fabrication des récipients, en particulier lors de la transformation des tubes en récipients, notamment par volatilisation de certaines espèces initialement présentes dans le verre, telle que les borates d'alcalins dans le cas d'une composition de verre borosilicate. Des récipients 1 en verre moulés présentent globalement de meilleures performances mécaniques que des récipients en verre étiré, dans la mesure où les récipients en verre moulé présentent une masse de verre plus importante, avec une épaisseur de paroi en verre également plus importante. Qui plus est, la fabrication de récipients en verre par moulage permet d'atteindre, pour un même format de récipient, des cadences de fabrication bien plus élevées (typiquement jusqu'à 500 récipients / minutes) que la fabrication de récipients en verre par conversion de tube de verre (typiquement jusqu'à 55 récipients / minutes). Il est également intéressant de souligner que la fabrication des récipients 1 par moulage, comme dans le procédé selon l'invention, génère des émissions de dioxyde de carbone CO₂ inférieures à celles respectivement générées par la fabrication de récipients en verre étiré. Cela s'explique en particulier par le fait que la fabrication de récipients 1 par moulage de verre fondu ne met en œuvre qu'une seule étape à chaud, alors que la fabrication de récipients en verre étiré nécessite la mise en œuvre de deux étapes distinctes, à savoir dans un premier temps, la fabrication initiale de la canne (tube) de verre à partir de verre fondu, puis dans un second temps la conversion à chaud de cette canne en récipient.

De plus, grâce à la mise en œuvre de ladite étape de fourniture du moule 11 et de ladite opération de traitement de ladite portion 14A, 14B de surface interne dudit moule 11 conformément à l'invention, il devient possible de maîtriser de manière particulièrement fiable et répétable l'état de surface, et en particulier la rugosité, de la surface de la face externe 8 des récipients 1 formés. Or il a été observé que la rugosité de la surface de la face externe de récipients en verre (figure 6) est un facteur clé pour la performance d'une inspection optique, et en particulier d'une inspection visuelle (qu'elle soit réalisée de manière « manuelle », à l'œil nu, par un opérateur humain, ou par des moyens techniques telle qu'une machine d'inspection visuelle, par exemple de manière automatisée), desdits récipients 1 à la recherche de particules P1, P2 étrangères présentes dans ces derniers. Dans le cas de récipients 1 en verre moulé, il s'avère que la rugosité de la surface de la face externe 8 desdits récipients 1 est généralement plus élevée que la rugosité de la surface externe de récipients en verre étiré, et que cette rugosité peut s'avérer particulièrement préjudiciable à la bonne détection optique / visuelle, à travers le verre des récipients 1, de particules P1, P2 étrangères présentes dans ces derniers, selon le niveau de rugosité et les dimensions caractéristiques des particules étrangères concernées. Il a été identifié que le niveau de rugosité de la surface de la face externe 8 d'un récipient 1 en verre moulé est corrélé au niveau de rugosité respectif de la surface interne du moule 11 utilisé pour le formage dudit récipient 1, et que la fluctuation de la rugosité de la surface interne du moule 11 au cours du cycle de vie de ce dernier conduit à une fluctuation préjudiciable, au cours du temps, de la rugosité de la surface externe des récipients 1 formés à l'aide dudit moule 11. En l'espèce, il a été déterminé qu'une telle fluctuation de la rugosité de la surface interne du moule 11 au cours du cycle de vie peut être due au contact répété entre la surface interne du moule 11 et du verre chaud, à l'encrassement du moule 11 (calamine, graisse, etc.), ou encore à la détérioration de l'état de surface du moule 11 sous l'effet d'une opération de nettoyage de ce dernier. Comme on le comprend, ladite opération de traitement de surface vise donc avantageusement en particulier à diminuer la valeur de rugosité de ladite portion 14A, 14B de surface interne dudit moule 11, qui a tendance à augmenter en usage répété du moule 11, et ce de telle manière que, à l'issue de ladite opération de traitement de surface, la valeur de rugosité de la portion 14A, 14B de surface interne du moule 11 est ainsi ramenée à une valeur inférieure ou égale à ladite valeur initiale de rugosité (et donc, inférieure ou égale à ladite valeur seuil prédéfinie de rugosité). Ainsi, grâce au procédé selon l'invention, il devient possible d'obtenir, de manière simple, fiable et répétable, des récipients 1 en verre qui sont particulièrement robustes et sûrs, en choisissant ladite valeur seuil prédéfinie de rugosité et ladite portion 14A, 14B de surface interne du moule 11 en regard des exigences d'inspection des récipients 1. La parfaite maîtrise de l'état de surface du moule 11 au cours de son cycle de vie permet d'obtenir des récipients 1 en verre dont l'état de la surface externe est en retour parfaitement maîtrisé. En particulier, ladite portion 14A, 14B de surface interne du moule 11 pourra être choisie en fonction de la partie des récipients 1 à travers laquelle l'inspection optique / visuelle sera réalisée. Ladite valeur seuil prédéfinie de rugosité pourra quant à elle être choisie en fonction des dimensions caractéristiques de particules étrangères dont la présence doit être détectée. Cela permet de limiter fortement le risque de « faux négatifs », c'est-à-dire le risque que des particules étrangères problématiques ne soient pas correctement détectées lors d'une inspection optique / visuelle des récipients après remplissage, ce qui entraînerait donc un risque sanitaire potentiel. Réciproquement, cela permet également de limiter fortement le risque de « faux positifs », c'est-à-dire le risque qu'une inspection optique / visuelle des récipients 1 après remplissage conduise de manière erronée à la détection de particules étrangères problématiques, et de là, à une destruction préventive, inutile et coûteuse, des récipients concernés et de leur contenu.

De plus, grâce aux caractéristiques particulières décrites ci-avant des étapes de fourniture et de maintenance du moule 11, il n'est avantageusement pas nécessaire de prévoir la mise en œuvre d'une opération de traitement de polissage desdits récipients 1 formés pour garantir une excellente maîtrise de la rugosité de la surface de la face externe 8 des récipients 1. Par conséquent, le procédé de fabrication selon l'invention est donc ainsi avantageusement dépourvu d'opération de traitement de polissage desdits récipients 1, tels que par exemple un polissage mécanique, un polissage à la flamme ou encore un polissage au laser. Cela contribue notamment à la simplicité et à la rapidité de mise en œuvre dudit procédé de fabrication. En outre, l'absence d'opération de traitement de polissage, en particulier à la flamme, permet avantageusement de garantir un excellent respect des contraintes dimensionnelles des récipients 1. En effet, le polissage pourrait avoir pour effet indésirable de modifier les formes et dimensions des récipients 1, particulièrement au niveau de la bague 10 de ces derniers, précisément conférées par le moule 11 en regard d'exigences liées au domaine pharmaceutique et aux lignes de conditionnement pharmaceutiques.

De préférence, ladite portion 14A, 14B de surface interne du moule 11 correspond plus précisément à la surface externe de la paroi latérale 5 desdits récipients 1. En d'autres termes, ladite portion 14A, 14B de surface interne du moule 11 est constituée par la surface de la partie 12A, 12B de la face interne 12A, 12B, 12C du moule 11 qui est destinée à conférer à la face externe de la paroi latérale 5 desdits récipients 1 sa forme finale. Ainsi, en application de ce qui précède, le procédé selon l'invention permet ainsi d'obtenir des récipients 1 qui peuvent être inspectés optiquement / visuellement de manière particulièrement fiable latéralement, c'est-à-dire à travers leur paroi latérale 5. Alternativement, mais de manière moins avantageuse, ladite portion de surface interne du moule 11 pourrait correspondre à la surface externe du fond 4 desdits récipients 1. Cependant, il est d'usage de prévoir que le fond de récipients 1 en verre moulé est pourvu de différents marquages en relief (nature du verre, numéro d'identification du moule, site de fabrication, etc.). La présence de tels marquages est susceptible, dans une certaine mesure, de rendre plus complexe une inspection optique / visuelle des récipients 1 à travers leur fond 4.

En matière d'inspectabilité optique / visuelle des récipients 1, et en particulier de détection par voie optique / visuelle de particules P1, P2 étrangères à l'intérieur de la cavité d'accueil 3 de ces derniers, il a été observé qu'il est particulièrement avantageux de s'intéresser à la rugosité de la surface de la face externe 8 de la paroi 2 en verre des récipients 1 obtenus, tant suivant la direction X1-X1' d'extension longitudinale desdits récipients 1 (profil « vertical » de rugosité), que suivant une direction Y1-Y1' d'extension transversale (ou direction « horizontale ») desdits récipient 1 qui est orthogonale à ladite direction X1-X1' d'extension longitudinale (profil « horizontal » de rugosité). En effet, les particules P1, P2 étrangères à détecter peuvent présenter des formes géométriques diverses qui, selon l'orientation spatiales desdites particules étrangères à l'intérieur des récipients 1 à inspecter, peuvent rendre plus ou moins complexe la bonne détection desdites particules étrangères. En effet, si la figure 6 illustre schématiquement des particules P1, P2 étrangères de forme sphérique, lesdites particules P1, P2 peuvent présenter des formes très diverses, hétérogènes, et par exemple filiforme (fibres), planes, etc.

Ainsi, ladite valeur seuil prédéfinie de rugosité, ladite valeur initiale de rugosité, et ladite valeur de rugosité de ladite portion 14A, 14B de surface interne du moule 11 obtenue à l'issue de ladite opération de traitement de surface sont chacune avantageusement définies par un couple de valeurs {Raₓ ; Ra_{y}} du paramètre Ra de rugosité, où
- Raₓ est le paramètre Ra de rugosité mesuré selon une direction X2-X2' de ladite portion 14A, 14B de surface interne du moule 11 (profil vertical de rugosité) qui correspond à la direction X1-X1' d'extension longitudinale du récipient 1 (i.e. en suivant une trajectoire de mesure inscrite dans un plan parallèle à la direction X1-X1' d'extension longitudinale dudit récipient 1 lorsque ce dernier est dans le moule 11), et
- Ra_{y} est le paramètre Ra de rugosité mesuré suivant une direction Y2-Y2' de ladite portion 14A, 14B de surface interne du moule 11 (profil horizontal de rugosité) qui correspond à une direction Y1-Y1' d'extension transversale dudit récipient 1 qui est orthogonale à la direction X1-X1' d'extension longitudinale du récipient 1 (*i.e.* en suivant une trajectoire de mesure inscrite dans un plan parallèle à la direction Y1-Y1' d'extension transversale dudit récipient 1 lorsque ce dernier est dans le moule 11).

Pour un profil de rugosité, le paramètre Ra de rugosité (ou « rugosité Ra ») est avantageusement défini comme étant la moyenne arithmétique des valeurs absolues des ordonnées du profil à l'intérieur d'une longueur de base, c'est-à-dire selon la norme ISO 4287:1997. Le paramètre Ra de rugosité peut également être défini comme étant la moyenne arithmétique des valeurs absolues des ordonnées du profil sur une longueur d'évaluation, c'est-à-dire selon la norme ISO 21920-2:2021, sans écart significatif en matière de valeur du paramètre Ra de rugosité par rapport à la norme ISO 4287:1997 précitée.

Par exemple, les valeurs Raₓ, Ra_{y} du paramètre Ra de rugosité peuvent être calculées, selon la direction X2-X2' ; Y2-Y2' correspondante de ladite portion 14A, 14B de surface interne du moule 11, à l'aide de mesures réalisées en utilisant un rugosimètre à palpeur, par exemple un rugosimètre de modèle SJ-500 de la société MITUTOYO, suivant les normes ISO 4288 :1996 et ISO 3274 :1996. Les conditions de mesure peuvent être, par exemple, telles décrites dans le tableau ci-après.

**Tableau 1**

| **Conditions de mesure** | **Selon la direction X2-X2' (verticale) Raₓ** | **Selon la direction Y2-Y2' (horizontale) Ra_{y}** |
|---|---|---|
| Norme | ISO 4287:1997 | ISO 4287:1997 |
| Longueur de base (mm) | 0,8 | 0,25 |
| Nombre de longueurs de base | 5 | 5 |
| Pas (µm) | 0,5 | 0,5 |
| Longueur d'évaluation (mm) | 4 | 1,25 |
| Vitesse de mesure (mm/s) | 0,2 | 0,2 |
| Type de filtrage : Mode P (profil primaire) / Mode R (mode rugosité) | R | R |
| Filtre passe-bas (λs) (µm) | Gaussien 2,5 | Gaussien 2,5 |
| Filtre passe-haut (λc, ou « *cut*-*off* »)) (µm) | Gaussien 2,5 | Gaussien 2,5 |

De plus, un filtre gaussien (tel que défini dans la norme ISO 11562:1996) est avantageusement également utilisé pour redresser le profil d'état de surface.

Ceci étant, d'autres techniques de mesure adéquates, avec ou sans contact, peuvent alternativement être mises en œuvre pour mesurer le paramètre Ra de rugosité, telle que par exemple une mesure optique par confocale chromatique ou encore par interférométrie.

De préférence, ladite valeur seuil prédéfinie de rugosité est définie par un couple de valeurs {Raₓ , Ra_{y}} du paramètre Ra de rugosité, tel que lesdites valeur Raₓ , Ra_{y} sont choisies chacune inférieures ou égales à 0,15 µm, plus préférentiellement comprises entre 0,05 µm et 0,15 µm, plus préférentiellement inférieures ou égales à 0,10 µm, et plus préférentiellement encore comprises entre 0,05 µm et 0,10 µm.

Avantageusement, le choix d'une telle valeur seuil prédéfinie de rugosité pour le moule 11 permet d'obtenir des récipients 1 tels que la surface externe de la paroi latérale 5 nue de chacun desdits récipients 1 présente une rugosité définie par un couple de valeurs {Raₓ ; Ra_{y}} du paramètre Ra de rugosité, où
- Raₓ est le paramètre Ra de rugosité mesuré selon la direction X1-X1' d'extension longitudinale dudit récipient 1 (*i*.*e*. suivant une trajectoire de mesure inscrite dans un plan parallèle à la direction X1-X1' d'extension longitudinale du récipient 1), et
- Ra_{y} est le paramètre Ra de rugosité mesuré selon la direction Y1-Y1' d'extension transversale du récipient 1, orthogonale à ladite direction d'extension longitudinale dudit récipient 1 (*i.e.* suivant une trajectoire de mesure inscrite dans un plan parallèle à la direction Y1-Y1' d'extension transversale du récipient 1), lesdites valeurs Raₓ, Ra_{y} étant chacune inférieures ou égales à 0,15 µm, plus préférentiellement comprises entre 0,05 µm et 0,15 µm, plus préférentiellement inférieures ou égales à 0,10 µm, et plus préférentiellement encore comprises entre 0,05 µm et 0,10 µm.

Avantageusement, ces valeurs Raₓ, Ra_{y} du paramètre Ra de rugosité sont mesurées, calculées, de la manière décrite ci-avant. Par « paroi latérale nue », on entend ici et dans ce qui suit que l'on s'intéresse à la surface externe nue, c'est-à-dire dépourvue de tout revêtement, de la paroi latérale 5 en verre.

Au lieu d'être considérées selon le paramètre Ra de rugosité, ladite valeur seuil prédéfinie de rugosité, ladite valeur initiale de rugosité, et ladite valeur de rugosité de ladite portion 14A, 14B de surface interne du moule 11 obtenue à l'issue de ladite opération de traitement de surface peuvent être chacune avantageusement définies par un couple de valeurs {Rqₓ ; Rq_{y}} du paramètre Rq de rugosité, où
- Rqₓ est le paramètre Rq de rugosité mesuré selon une direction X2-X2' de ladite portion 14A, 14B de surface interne du moule 11 (profil vertical de rugosité) qui correspond à la direction X1-X1' d'extension longitudinale du récipient 1 (i.e. en suivant une trajectoire de mesure inscrite dans un plan parallèle à la direction X1-X1' d'extension longitudinale dudit récipient 1 lorsque ce dernier est dans le moule 11), et
- Rq_{y} est le paramètre Rq de rugosité mesuré suivant une direction Y2-Y2' de ladite portion 14A, 14B de surface interne du moule 11 (profil horizontal de rugosité) qui correspond à une direction Y1-Y1' d'extension transversale dudit récipient 1 qui
est orthogonale à la direction X1-X1' d'extension longitudinale du récipient 1 (i.e. en suivant une trajectoire de mesure inscrite dans un plan parallèle à la direction Y1-Y1' d'extension transversale dudit récipient 1 lorsque ce dernier est dans le moule 11).

Pour un profil de rugosité, le paramètre Rq de rugosité (ou « rugosité Rq », ou encore « rugosité quadratique moyenne » (R_{RMS})) est avantageusement défini, dans le contexte de l'invention, comme étant la moyenne quadratique des valeurs des ordonnées du profil à l'intérieur d'une longueur de base, c'est-à-dire selon les termes de la norme ISO 4287:1997. Le paramètre Rq de rugosité peut également être défini comme étant la moyenne arithmétique des valeurs absolues des ordonnées du profil sur une longueur d'évaluation, c'est-à-dire selon la norme ISO 21920-2:2021, sans écart significatif en matière de valeur du paramètre Rq de rugosité par rapport à la norme ISO 4287:1997 précitée.

Par exemple, les valeurs Rqₓ, Rq_{y} du paramètre Rq de rugosité peuvent être calculées, selon la direction X2-X2' ; Y2-Y2' correspondante de ladite portion 14A, 14B de surface interne du moule 11, à l'aide de mesures réalisées par un rugosimètre à palpeur, par exemple un rugosimètre de modèle SJ-500 de la société MITUTOYO, suivant les normes ISO 4288 :1996 et ISO 3274 :1996. Les conditions de mesure peuvent être, par exemple, telles décrites dans le tableau ci-après.

**Tableau 2**

| **Conditions de mesure** | **Selon la direction X2-X2' (verticale) Rqₓ** | **Selon la direction Y2-Y2' (horizontale) Rq_{y}** |
|---|---|---|
| Norme | ISO 4287:1997 | ISO 4287:1997 |
| Longueur de base (mm) | 0,8 | 0,25 |
| Nombre de longueurs de base | 5 | 5 |
| Pas (µm) | 0,5 | 0,5 |
| Longueur d'évaluation (mm) | 4 | 1,25 |
| Vitesse de mesure (mm/s) | 0,2 | 0,2 |
| Type de filtrage : Mode P (profil primaire) / Mode R (mode rugosité) | R | R |
| Filtre passe-bas (λs) (µm) | Gaussien 2,5 | Gaussien 2,5 |
| Filtre passe-haut (Ac, ou « *cut-off* »)) (µm) | Gaussien 2,5 | Gaussien 2,5 |

De plus, un filtre gaussien (tel que défini dans la norme ISO 11562:1996) est avantageusement également utilisé pour redresser le profil d'état de surface.

De préférence, ladite valeur seuil prédéfinie de rugosité est définie par un couple de valeurs {Rqₓ , Rq_{y}} du paramètre Rq de rugosité, tel que lesdites valeurs Rqₓ , Rq_{y} sont choisies chacune inférieures ou égales à 0,15 µm, plus préférentiellement comprises entre 0,05 µm et 0,15 µm, plus préférentiellement inférieures ou égales à 0,10 µm, et plus préférentiellement encore comprises entre 0,05 µm et 0,10 µm.

Avantageusement, le choix d'une telle valeur seuil prédéfinie de rugosité pour le moule 11 permet d'obtenir des récipients 1 tels que la surface externe de la paroi latérale 5 nue de chacun desdits récipients 1 présente une rugosité définie par un couple de valeurs {Rqₓ ; Rq_{y}} du paramètre Rq de rugosité, où
- Rqₓ est le paramètre Rq de rugosité mesuré selon la direction X1-X1' d'extension longitudinale dudit récipient 1 (*i.e.* suivant une trajectoire de mesure inscrite dans un plan parallèle à la direction X1-X1' d'extension longitudinale du récipient 1), et
- Rq_{y} est le paramètre Rq de rugosité mesuré selon la direction Y1-Y1' d'extension transversale du récipient 1, orthogonale à ladite direction X1-X1' d'extension
longitudinale dudit récipient 1 (*i.e.* suivant une trajectoire de mesure inscrite dans un plan parallèle à la direction (Y1-Y1') d'extension transversale du récipient 1), lesdites valeurs Rqₓ, Rq_{y} étant chacune inférieures ou égales à 0,15 µm, plus préférentiellement comprises entre 0,05 µm et 0,15 µm, plus préférentiellement inférieures ou égales à 0,10 µm, et plus préférentiellement encore comprises entre 0,05 µm et 0,10 µm.

Avantageusement, ces valeurs Rqₓ, Rq_{y} du paramètre Rq de rugosité sont mesurées, calculées, de la manière décrite ci-avant.

L'intérêt de raisonner en termes de paramètre Rq de rugosité, plutôt qu'en termes de paramètre Ra de rugosité, s'explique ici par le fait que la grandeur Rq² (soit un couple de valeurs Rqₓ² ; Rq_{y}²) reflète, en optique, l'intégrale de la densité spectrale de puissance (DSP) sur toute la gamme de fréquences spatiales. Or il a été observé que la maîtrise de la valeur de la densité spectrale de puissance des récipients 1 formés, qui est corrélée à la valeur de la densité spectrale de puissance respective de la surface interne du moule 11, est particulièrement importante en matière de détection optique / visuelle de particules P1, P2 étrangères. En effet, plus la densité spectrale de puissance de la surface la face externe 8 des récipients 1 est élevée, plus complexe et moins fiable s'avère la détection optique / visuelle de particules P1, P2 étrangères.

Il a été observé que les plages préférentielles de valeurs Raₓ , Ra_{y} du paramètre Ra de rugosité, et / ou les plages préférentielles de valeurs Rqₓ , Rq_{y} du paramètre Rq de rugosité, évoquées ci-avant permettent avantageusement d'obtenir des récipients 1 qui peuvent être inspectés optiquement / visuellement de manière particulièrement fiable (limitation du nombre de cas de non-détection et de faux positifs) à la recherche de particules P1, P2 étrangères, notamment en regard des exigences définies au chapitre <790> (« *Visible Particulates in Injections* ») de la Pharmacopée des États-Unis d'Amérique (« *U.S. Pharmacopeial Convention* » (USP)), au chapitre PE 2.9.20 (« *Contamination particulaire : particules visibles* ») correspondant de la Pharmacopée Européenne, en matière de présence de particules étrangères dans des produits pharmaceutiques injectables parentéraux. Des exemples de telles particules comprennent, sans toutefois s'y limiter, les fibres, le verre, le métal, les matériaux élastomères et les précipités.

Des essais comparatifs ont été réalisés en laboratoire pour comparer les performances en matières d'inspectabilité optique / visuelle de récipients 1 en verre obtenus selon un procédé conforme à l'invention avec celles de récipients en verre moulé standards. Dans ce cadre, des tests d'inspection visuelle ont été réalisés, d'une part, sur des récipients 1 en verre moulé, de type flacon, conformes au procédé selon l'invention et de contenance nominale de 10 ml (« 10H ») et 20 ml (« 20H ») et, d'autre part, des récipients 1 en verre étiré, de type flacon, de contenance nominale de 10 ml (« 10R ») et 20 ml (« 20R »). Plus spécifiquement, les récipients 1 en verre moulé testés ont été obtenus en choisissant ladite valeur seuil prédéfinie de rugosité comme étant définie par un couple de valeurs {Raₓ ; Ra_{y}} tel que Raₓ est compris entre 0,06 µm et 0,12 µm et Ra_{y} est compris entre 0,08 µm et 0,1 µm.

Pour chacun de ces 4 types de récipients testés, des kits de test (unités « défectueuses ») ont été préparés en remplissant des récipients à inspecter avec un liquide et en introduisant dans ce liquide un certain nombre de particules étrangères, tel que décrit dans le tableau 3 ci-après.

**Tableau 3**

| **Taille de particules (µm)** | **Nombre de particule(s) de verre** | **Nombre de fibre(s) de cellulose noire** | **Nombre de particule(s) de métal** | **Nombre de particule(s) flottante(s) blanche(s)** |
|---|---|---|---|---|
| 100-150 | 1 | / | 1 | / |
| 150-200 | 1 | / | 1 | / |
| 200-250 | 2 | / | 2 | / |
| 250-300 | 2 | 1 | 2 | / |
| 300-400 | / | 2 | / | / |
| 400-500 | / | 2 | / | 1 |
| 500-600 | / | 1 | / | 2 |
| 600-800 | / | 1 | / | 1 |

La taille des particules en µm est ici exprimée en termes de diamètre circulaire équivalent (DCE).

Chacun des kits de test comprenait ainsi 23 particules étrangères (« défauts »), de 4 types différents, tel que décrit dans le tableau ci-avant. En retour, des récipients « sans défaut », c'est-à-dire remplis de liquide mais dépourvus de particules étrangères, ont été préparés (unités « non défectueuses »).

L'inspection visuelle des récipients précités a été réalisée par des opérateurs humains (« inspecteurs »), selon une méthode d'inspection visuelle manuelle conforme à celle décrite au chapitre <790> (« *Visible Particulates in Injections* ») de la Pharmacopée des États-Unis d'Amérique et au chapitre PE 2.9.20 (« *Contamination particulaire : particules visibles* ») correspondant de la Pharmacopée Européenne. Chacun des opérateurs humains a conduit 3 inspections pour chaque unité à inspecter.

Avant la réalisation de l'étude, tous les récipients ont été vérifiés dans des conditions d'inspection visuelle améliorées (grossissement, intensité lumineuse plus élevée et durée d'inspection illimitée). Il a été confirmé que toutes les unités défectueuses contenaient les particules étrangères spécifiées. De plus, les particules étrangères n'ont pas adhéré au bouchon en élastomère fermant lesdits récipients.

Les paramètres suivants ont été évalués en particulier :
- la probabilité de détection (PdD) pour chacune des unités défectueuses, calculée selon la formule suivante : PdD = (Total du nombre de fois qu'une unité défectueuse a été rejetée / Total du nombre de fois que cette unité défectueuse a été inspectée) x 100 %
- le taux de faux rejet (TFR), calculé selon la formule suivante : TFR = (Nombre total d'unités non défectueuses rejetées par erreur / Nombre total d'unités non défectueuses) x 100 %. Ce taux de faux rejet est calculé pour chaque opérateur, par série d'inspection et pour l'ensemble de l'étude.

D'après les valeurs de probabilité de détection des quatre types de particules utilisés dans l'étude, et les courbes de valeurs de probabilité de détection ainsi obtenues, les observations suivantes ont été faites :
- aucune différence de détectabilité des fibres de cellulose noires n'est observée entre les récipients en verre étiré et récipients 1 en verre moulé ;
- une légère différence est observée entre les valeurs de probabilité de détection de particules de verre et de métal de même taille pour les récipients en verre étiré et pour les récipients 1 en verre moulé. Toutefois, cette légère différence semble s'expliquer par une agitation insuffisante des récipients lors de l'inspection, les particules pouvant avoir tendance à se déposer dans un relief des récipients 1 en verre moulé ;
- aucune différence notable n'est observée entre les récipients en verre étiré et les récipients 1 en verre moulé s'agissant des particules flottantes blanches, les valeurs de probabilité de détection pour ce type de particules étrangères étant disparates pour les deux types de récipients en verre ;
- aucune différence majeure n'est observée entre les courbes de valeurs de probabilité de détection des défauts dans les récipients 1 en verre moulé et dans les récipients en verre étiré.

De manière générale, le taux de faux rejet doit être inférieur à 5 %. Alors que l'on aurait pu penser que des récipients en verre moulé présenteraient un taux de faux rejet plus important que des récipients en verre étiré, il a été observé que les récipients en verre moulé testés, qui ont été obtenus grâce au procédé de fabrication selon l'invention, présentent au contraire un taux de faux rejet très satisfaisant et très proche de celui observé pour des récipients en verre étiré.

En définitive, ces essais ont donc permis de démontrer que des récipients 1 en verre moulé obtenus conformément à l'invention peuvent être inspectés visuellement par un être humain avec un niveau de fiabilité sensiblement identique à celui obtenu pour des récipients en verre étiré.

Afin de nettoyer le moule 11 au cours de ladite étape de maintenance de ce dernier, différentes techniques de nettoyage peuvent être mises en œuvre, seules ou en combinaison entre elles. De préférence toutefois, ladite étape de maintenance comprend une opération de nettoyage de ladite portion de surface interne dudit moule par grenaillage, c'est-à-dire par projection de billes sur au moins ladite portion de surface interne du moule, à une vitesse de projection pouvant typiquement aller jusqu'à 100 m/s. De préférence, lesdites billes sont projetées de manière pneumatique (c'est-à-dire à l'aide d'un flux de gaz comprimé), ce qui permet de cibler plus efficacement le nettoyage sur ladite portion 14A, 14B de surface interne du moule 11. Typiquement réalisée après avoir placé le moule 11 dans une enceinte de nettoyage fermée, cette opération de nettoyage par grenaillage est réalisée avant ladite opération de traitement de ladite portion 14A, 14B de surface interne dudit moule 11 qui vise à conférer à cette dernière une valeur de rugosité inférieure ou égale à ladite valeur initiale de rugosité. De préférence, ladite opération de nettoyage par grenaillage est réalisée à l'aide de billes qui présente une dureté Vickers comprise entre 500 et 850, et par exemple égale à 700, mesurée selon la méthode HV1 (normes ISO 6507 et ASTM E384). Exprimée en dureté Rockwell, lesdites billes présentent une dureté préférentiellement comprise entre 50 et 65 (HRC).

Ladite opération de nettoyage par grenaillage est réalisée à l'aide de billes d'un diamètre préférentiellement compris entre 200 µm et 500 µm, et plus préférentiellement compris entre 250 µm et 425 µm. De préférence, ladite opération de nettoyage par grenaillage est réalisée à l'aide de billes à base de céramique, qui s'avèrent particulièrement efficaces en matière de nettoyage tout en respectant mieux l'intégrité dimensionnelle du moule 11. Par exemple, lesdites billes peuvent présenter une microstructure céramique en dioxyde de zirconium ZrO₂ enrobée dans une phase vitreuse (ZrO₂ : entre 60 et 70 % en masse ; SiO₂ : entre 28 et 33 % en masse ; AlO₂ : < 10 % en masse ; autre : < 1 % en masse ), un diamètre compris entre 250 µm et 425 µm ; une dureté Vickers (HV1) de 700 ; une masse volumique de 3,85 g/ cm³ (i.e. 3,85×10⁶ g/m³), et une masse volumique apparente de 2,3 kg/L (i.e. 2,3×10⁶ g/m³). Il a été observé qu'une telle opération de nettoyage par grenaillage est en pratique plus rapide et / ou plus simple à mettre en œuvre, et plus efficace en termes de nettoyage (en particulier s'agissant de traces de graisse ou de calamine), qu'une opération de nettoyage qui serait réalisée par sablage, par aérogommage, par laser ou encore par ultrasons.

De manière avantageuse, ladite opération de traitement de ladite portion 14A, 14B de surface interne du moule 11 comprend un traitement par tribofinition, c'est-à-dire un traitement de polissage mécanochimique, réalisé par immersion au moins de ladite portion14A, 14B de surface interne du moule 11 dans un mélange abrasif mis en mouvement vibratoire, oscillatoire, ou rotatif dans une cuve ouverte ou fermée. Plus avantageusement encore, ledit traitement par tribofinition est réalisé par mise en contact au moins de ladite portion 14A, 14B de surface interne du moule 11 avec un mélange abrasif comprenant au moins un média à base de particules métalliques, de préférence des particules (ou « copeaux ») de cuivre, de préférence pur à 99,9 %, et une substance abrasive.

De préférence, les particules dudit média sont choisies, en particulier lorsqu'il s'agit de cuivre comme évoqué ci-dessus, avec des dimensions caractéristiques choisies parmi : 2 mm x 4 mm x 1 mm, 3 mm x 4 mm x 1 mm et 4 mm x 6 mm x 1 mm. Plus préférentiellement encore, lesdites particules du média présentent des dimensions caractéristiques de 3 mm x 4 mm x 1 mm, ce qui permet avantageusement d'optimiser l'efficacité du traitement tout en facilitant la circulation des particules du média, et donc en limitant un risque de blocage du ou des dispositif(s) utilisé(s) pour la réalisation du traitement par tribofinition.

Il a été observé que, par rapport à d'autres types de traitement envisageables, un tel traitement par tribofinition permet d'atteindre de manière efficace et relativement rapide des niveaux de rugosité particulièrement faibles. Qui plus est, il a été observé que le traitement par tribofinition est particulièrement répétable et génère très peu d'enlèvement de matière, ce qui permet de limiter un éventuel effet de dérive dimensionnelle du moule 11 au fil du temps.

Des résultats obtenus sur des moules en différents matériaux métalliques ont en effet permis de démontrer la possibilité d'obtenir des valeurs de paramètre Ra de rugosité (et en particulier des valeurs Raₓ, Ra_{y} de paramètre Ra de rugosité telles que définies ci-avant) comprises :
- entre 0,09 µm et 0,13 µm, pour une durée de traitement inférieure ou égale à 2 heures, en partant de valeurs de paramètre Ra de rugosité comprises entre 0,25 µm et 0,65 µm,
- entre 0,05 µm et 0,12 µm, pour une durée de traitement inférieure ou égale à 2 heures 30, en partant de valeurs de paramètre Ra de rugosité comprises entre 0,13 µm et 1,06 µm.

Bien évidemment, les modalités (durée de traitement, fréquence du mouvement vibratoire, nature des produits utilisés, etc.) précises de mise en œuvre d'un tel traitement par tribofinition sont choisies selon le niveau de rugosité à atteindre à l'issue de l'opération de traitement de surface. Ces modalités peuvent être ajustées en fonction du matériau du moule 11, des dimensions et formes de la portion 14A, 14B de surface interne à traiter, etc.

La mise en œuvre d'un tel traitement par tribofinition s'avère ainsi particulièrement intéressant lorsque l'étape de maintenance du moule 11 comprend une opération de nettoyage par grenaillage telle que définie ci-avant. En effet, si elle s'avère particulièrement efficace en termes de nettoyage du moule 11, une telle opération de nettoyage par grenaillage est susceptible de conduire à une augmentation de la rugosité de la surface de la face interne 12A, 12B, 12C du moule 11.

L'invention n'est toutefois évidemment pas limitée à une opération de traitement comprenant un traitement par tribofinition, pour permettre de ramener la valeur de rugosité de ladite portion 14A, 14B de surface interne du moule 11 à une valeur qui est inférieure ou égale à ladite valeur initiale de rugosité. Par exemple, un autre type de traitement envisageable pourrait consister à réaliser une succession d'opérations de polissage mécanique de ladite portion 14A, 14B de surface interne du moule 11 à l'aide de toiles de polissage présentant des tailles de grains de plus en plus fins. En revanche, un tel polissage mécanique pourrait s'avérer particulièrement long et complexe à mettre en œuvre, en particulier dans le cas où la portion 14A, 14B de surface interne du moule 11 à traiter comprend des zones d'angle dudit moule 11. Qui plus est un tel polissage mécanique serait difficilement automatisable, et devrait être réalisé à la main par un opérateur. Cela engendrait de fait des temps de traitement importants, et un risque de variabilité du résultat obtenu d'un opérateur à un autre. En outre un polissage mécanique à la toile de polissage est susceptible de conduire à un enlèvement de matière important, entraînant une dérive dimensionnelle du moule 11 au fil du temps.

Selon un mode de réalisation préférentiel, le formage par moulage de ladite pluralité de récipients 1 est réalisé selon un procédé en deux étapes successives de moulage, à savoir, pour chacun des récipients 1 :
- le formage d'une ébauche à partir d'une paraison de verre fondu à l'aide d'un moule ébaucheur, par exemple par soufflage de la paraison dans le moule ébaucheur (procédé dit « soufflé - soufflé ») ou par pressage de la paraison dans le moule ébaucheur avec un poinçon (procédé dit « pressé - soufflé »),
- puis le formage dudit récipient 1 par soufflage de ladite ébauche dans un moule finisseur.

Selon ce mode de réalisation, ledit moule 11 destiné à conférer auxdits récipients 1 leur forme finale est donc ici un moule 11 finisseur, comme illustré en exemple aux figures 3 à 5, et non pas un moule ébaucheur.

Par exemple mis en œuvre d'une machine de formage automatique à plusieurs sections (ou « machine IS »), le procédé de fabrication desdits récipients 1 peut donc alors comprendre :
- une étape de fourniture d'un moule ébaucheur destiné à la formation d'ébauches desdits récipients à partir de paraisons de verre fondu, et
- le formage de ladite pluralité des récipients 1 par moulage, à partir de paraisons de verre fondu, à l'aide dudit moule ébaucheur puis à l'aide dudit moule 11 finisseur.

Typiquement, le moule ébaucheur (non illustré) peut comprendre deux coquilles ébaucheur, qui sont distinctes et séparables l'une de l'autre pour permettre un démoulage des ébauches, un moule de bague, un fond ébaucheur, et un entonnoir pour guider une paraison de verre fondu dans l'espace interne de formage défini par les coquilles ébaucheur, le moule de bague et le fond ébaucheur. Typiquement, le moule 11 finisseur peut comprendre deux coquilles 11A, 11B finisseur qui sont distinctes et séparables l'une de l'autre pour permettre un démoulage des récipients 1, une plaque finisseur 11C, 11D et un fond finisseur 11E. Eventuellement, comme dans l'exemple illustré aux figures 3 à 5, la plaque finisseur 11C, 11D peut être formée en deux parties par lesdites coquilles 11A, 11B finisseur, au lieu d'être formée par une pièce de moule distincte desdites coquilles 11A, 11B finisseur.

Le procédé de fabrication desdits récipients 1 peut également comprendre une étape de maintenance dudit moule ébaucheur, par exemple à visée préventive et réalisée selon une fréquence de traitement prédéterminée ou à visée curative selon des résultats d'un contrôle réalisé sur les récipients 1 formés, par exemple au « bout froid » (par exemple en salle blanche classée ISO8). Cette étape de maintenance peut viser en particulier à nettoyer le moule ébaucheur et la face interne de ce dernier, en vue d'éliminer d'éventuels débris, résidus et contaminants présents (morceaux de verre, poussière, graisse, calamine, etc.), susceptibles de dégrader les performances du moule ébaucheur et la qualité des récipients 1 formés à l'aide de ce dernier. A ce titre, l'étape de maintenance du moule ébaucheur peut alors avantageusement comprendre une opération de nettoyage de ladite portion de surface interne dudit moule ébaucheur par grenaillage, telle qu'envisagée ci-avant.

Optionnellement, **il** peut être prévu
- que ledit moule ébaucheur fourni présente au moins une portion de surface interne, correspondant à ladite portion de surface interne dudit moule finisseur, et ayant une rugosité de valeur initiale inférieure ou égale à une valeur seuil prédéfinie de rugosité ; et
- que l'étape de maintenance dudit moule ébaucheur comprend une opération de traitement de ladite portion de surface interne dudit moule ébaucheur pour conférer à ladite portion de surface interne une valeur de rugosité qui est inférieure ou égale à ladite valeur initiale de rugosité.

Ainsi, le principe décrit ci-avant en lien avec le moule 11 destiné à conférer auxdits récipients 1 leur forme finale (dans ce cas particulier, le moule finisseur) peut être avantageusement appliqué à la fois au moule 11 finisseur et au moule ébaucheur, ce qui peut conduire à l'obtention de résultats encore meilleurs en matière de capacité des récipients 1 à être efficacement inspectés optiquement / visuellement. Avantageusement, les caractéristiques décrites ci-avant notamment en matière de valeurs de paramètre Ra de rugosité, de paramètre Rq de rugosité, et de mode opératoire de l'opération de traitement de ladite portion de surface interne du moule pourrait donc être appliquées *mutatis mutandis,* en tout ou partie, audit moule ébaucheur.

Ceci étant, il a été avantageusement observé qu'il n'est pas forcément nécessaire de mettre en œuvre une telle opération de traitement de ladite portion de surface interne du moule ébaucheur pour parvenir à des résultats satisfaisants. En l'espèce, il s'avère que l'opération de traitement de ladite portion de surface interne dudit moule 11 finisseur telle que décrite ci-avant est suffisante pour l'obtention de résultats très satisfaisants. Ainsi, bien que le procédé peut effectivement comprendre une étape de maintenance dudit moule ébaucheur, l'omission d'une telle opération de traitement de ladite portion de surface interne du moule ébaucheur permet avantageusement de simplifier le procédé de fabrication des récipients 1, et d'en réduire les coûts de mise en œuvre.

Pour autant, il n'en reste pas moins avantageux de prévoir que ledit moule ébaucheur présente au moins une portion de surface interne, correspondant à ladite portion de surface interne dudit moule finisseur, et ayant une rugosité de valeur initiale inférieure ou égale à une valeur seuil prédéfinie de rugosité, qui est choisie inférieure ou égale à ladite valeur seuil prédéfinie de rugosité respective dudit moule finisseur, telle que décrite ci-avant.

Selon un mode de réalisation alternatif, moins avantageux, les récipients 1 pourraient être formés par moulage à l'aide uniquement d'un moule destiné à conférer auxdits récipients 1 leur forme finale, par exemple par pressage d'une paraison de verre fondu dans ledit moule (procédé dit « pressé pur »), par exemple dans le cas où les récipients 1 forment des récipients à ouverture large, tels que des pots notamment.

De préférence, le verre desdits récipients 1 est un verre borosilicate (verre dit de « *Type I* », au sens de la Pharmacopée Européenne (PE) et de la Pharmacopée des États-Unis d'Amérique (USP) notamment, ou « *neutre* »). Typiquement, un verre borosilicate (ou « verre borosilicaté » ou encore « verre à base de borosilicate ») est un verre de silice qui contient avantageusement entre 7 % et 13 %, par exemple entre 10 % et 13 %, en masse de trioxyde de bore (B₂O₃). En comparaison avec un verre silicosodocalcique (verre dit de « *Type III* »), un verre borosilicate présente intrinsèquement une meilleure résistance chimique, dans la mesure notamment où un verre borosilicate contient une proportion moindre en espèces alcalines et alcalino-terreuses, et en particulier en sodium.

S'agissant de verre moulé, la paroi 2 en verre des récipients 1 présente une épaisseur e1, e2 qui n'est pas nécessairement parfaitement constante. En effet, le moulage du verre par pressage et / ou par soufflage peut conduire à une répartition non strictement homogène du verre suivant ladite direction X1-X1' d'extension longitudinale des récipients 1. De plus, le fond 4 de récipients 1 moulé peut présenter une épaisseur e2 qui est généralement plus importante que l'épaisseur e1 de la paroi latérale 5 desdits récipients 1. Ceci étant, il a été observé qu'une certaine hétérogénéité de l'épaisseur e1 de la paroi latérale 5 en verre des récipients 1 ne constitue pas une gêne significative pour l'inspection optique / visuelle des récipients 1 et de leur contenu à travers ladite paroi latérale 5.

De manière préférentielle, ladite paroi latérale 5 des récipients 1, obtenus à l'issue du formage par moulage, présente une épaisseur e1 dont la valeur moyenne est supérieure à 1 mm ± 0,4 mm. Plus avantageusement, la paroi latérale 5 des récipients 1 obtenus à l'issue du procédé présente une épaisseur e1 dont la valeur est entre 1 mm et 3,5 mm (± 0,5 mm), selon la contenance des récipients 1. Par exemple, pour un récipient 1 d'une contenance nominale de 10 ml, l'épaisseur e1 de la paroi latérale 5 de ce dernier peut avantageusement présenter une valeur comprise entre 1,3 mm et 3 mm. Avantageusement, le procédé de fabrication desdits récipients 1 comprend une étape de contrôle de l'épaisseur e1 de ladite paroi latérale 5 des récipients 1, et une étape de mise au rebus des récipients 1 pour lesquels l'épaisseur e1 de la paroi latérale 5 présente localement une valeur inférieure ou égale à 0,8 mm. Une telle étape de contrôle de l'épaisseur e1 de ladite paroi latérale 5 des récipients 1 peut être réalisée par tout moyen connu et adapté, et en particulier par des moyens optiques ou à l'aide d'un mesureur d'épaisseur à effet Hall (par exemple un mesureur Magna-Mike^{®} 8600 de la société EVIDENT). Ainsi, les récipients 1 obtenus à l'issue du procédé présentent une excellente résistance mécanique, quelle que soit la nature du test de résistance réalisé (résistance verticale et latérale, résistance à la pression interne, test de chute), ce qui contribue au caractère particulièrement robuste et sûr desdits récipients 1.

## Revendications

1. Procédé de fabrication de récipients (1) en verre destinés à contenir une substance (S) pharmaceutique, ledit procédé comprenant :
- une étape de fourniture d'un moule (11) destiné à conférer auxdits récipients (1) leur forme finale, ledit moule (11) présentant au moins une portion (14A, 14B) de surface interne ayant une rugosité de valeur initiale inférieure ou égale à une valeur seuil prédéfinie de rugosité,
- le formage d'une pluralité desdits récipients (1) par moulage à partir de paraisons de verre fondu à l'aide dudit moule (11), et
- une étape de maintenance dudit moule (11),
ladite étape de maintenance comprenant une opération de traitement de ladite portion (14A, 14B) de surface interne dudit moule (11) pour conférer à ladite portion (14A, 14B) de surface interne une valeur de rugosité qui est inférieure ou égale à ladite valeur initiale de rugosité.

2. Procédé selon la revendication précédente, dans lequel lesdits récipients (1) comprennent chacun une paroi (2) en verre qui délimite une cavité (3) d'accueil pour ladite substance (S) pharmaceutique, ladite paroi (2) formant un fond (4) et une paroi latérale (5) qui s'étend depuis ledit fond (4) en direction d'une ouverture (6) dudit récipient (1) suivant une direction (X1-X1') d'extension longitudinale dudit récipient (1), ladite portion (14A, 14B) de surface interne dudit moule (11) correspondant à une surface externe de la paroi latérale (5) desdits récipients (1).

3. Procédé selon la revendication précédente, dans lequel ladite valeur seuil prédéfinie de rugosité est définie par un couple de valeurs {Raₓ ; Ra_{y}} du paramètre Ra de rugosité, où
- Raₓ est le paramètre Ra de rugosité mesuré selon une direction (X2-X2') de ladite portion (14, 14B) de surface interne du moule (11) qui correspond à la direction (X1-X1') d'extension longitudinale dudit récipient (1), et
- Ra_{y} est le paramètre Ra de rugosité mesuré selon une direction (Y2-Y2') de ladite portion (14A, 14B) de surface interne du moule (11) qui correspond à une direction (Y1-Y1') d'extension transversale du récipient (1) qui est orthogonale à ladite direction (X1-X1') d'extension longitudinale dudit récipient (1), lesdites valeurs Raₓ, Ra_{y} du paramètre Ra de rugosité étant chacune inférieures ou égales à 0,15 µm, de préférence comprises entre 0,05 µm et 0,15 µm.

4. Procédé selon la revendication précédente, dans lequel lesdites valeurs Raₓ, Ra_{y} du paramètre Ra de rugosité sont chacune inférieures ou égales à 0,10 µm, et de préférence comprises entre 0,05 µm et 0,10 µm.

5. Procédé selon l'une quelconque des revendications 2 à 4, dans lequel la surface externe de la paroi latérale (5) nue de chacun desdits récipients (1) présente des valeurs Rqₓ et Rq_{y} du paramètre Rq de rugosité qui sont chacune inférieures ou égales à 0,15 µm, plus préférentiellement comprises entre 0,05 µm et 0,15 µm, plus préférentiellement inférieures ou égales à 0,10 µm, et plus préférentiellement encore comprises entre 0,05 µm et 0,10 µm, où Rqₓ est le paramètre Rq de rugosité mesuré selon la direction (X1-X1') d'extension longitudinale dudit récipient (1) et Rq_{y} est le paramètre Rq de rugosité mesuré selon une direction d'extension transversale dudit récipient (1) qui est orthogonale à ladite direction (X1-X1') d'extension longitudinale.

6. Procédé selon l'une quelconque des revendications 2 à 5, dans lequel ladite paroi latérale (5) des récipients (1) présente une épaisseur (e1) dont la valeur moyenne est supérieure à 1 mm ± 0,4 mm, ledit procédé comprenant une étape de contrôle de l'épaisseur (e1) de ladite paroi latérale (5) des récipients (1), et une étape de mise au rebus des récipients (1) pour lesquels l'épaisseur (e1) de la paroi latérale (5) présente localement une valeur inférieure ou égale à 0,8 mm.

7. Procédé selon l'une quelconque des revendications précédentes, dans lequel ladite opération de maintenance comprend, avant ladite opération de traitement de ladite portion (14A, 14B) de surface interne dudit moule (11), une opération de nettoyage de ladite portion (14A, 14B) de surface interne dudit moule (11) par grenaillage, à l'aide de billes d'un diamètre préférentiellement compris entre 250 µm et 425 µm, lesdites billes étant préférentiellement à base de céramique.

8. Procédé selon l'une quelconque des revendications précédentes, dans lequel ladite opération de traitement de ladite portion (14A, 14B) de surface interne dudit moule (11) comprend un traitement par tribofinition.

9. Procédé selon la revendication précédente, dans lequel ledit traitement par tribofinition est réalisé par mise en contact au moins de ladite portion (14A, 14B) de surface interne dudit moule (11) avec un mélange abrasif comprenant au moins un média à base de particules métalliques, de préférence des particules de cuivre, et une substance abrasive.

10. Procédé selon l'une quelconque des revendications précédentes, dans ledit moule (11) est un moule finisseur.

11. Procédé selon l'une quelconque des revendications précédentes, dans lequel le verre desdits récipients (1) est un verre borosilicate.

12. Procédé selon l'une quelconque des revendications précédentes, lequel est dépourvu d'opération de traitement de polissage desdits récipients (1), tels que par exemple un polissage mécanique ou un polissage à la flamme.
